Europäisches Patentamt

European Patent Office

Office européen des brevets

(11) Veröffentlichungsnummer: **0 304 679 B1**

# EUROPÄISCHE PATENTSCHRIFT

(45) Veröffentlichungstag der Patentschrift: **25.11.92**

(51) Int. Cl.⁵: **B32B 27/08**, B32B 27/30

(21) Anmeldenummer: **88112513.2**

(22) Anmeldetag: **02.08.88**

(54) **Verbundplatte.**

(30) Priorität: **24.08.87 AT 2106/87**

(43) Veröffentlichungstag der Anmeldung:
**01.03.89 Patentblatt 89/09**

(45) Bekanntmachung des Hinweises auf die
Patenterteilung:
**25.11.92 Patentblatt 92/48**

(84) Benannte Vertragsstaaten:
**AT BE CH DE ES FR GB GR IT LI LU NL SE**

(56) Entgegenhaltungen:
**EP-A- 0 060 421
EP-A- 0 151 812
EP-A- 0 225 500
DE-A- 2 938 462**

(73) Patentinhaber: **INTEC PLASTIC PRODUCTS
Gesellschaft m.b.h.
Nr. 444
A-5721 Piesendorf(AT)**

(72) Erfinder: **Klepsch, Wilhelm, Dipl.-Ing.
Rosbachstrasse 563
A-5710 Kaprun(AT)**
Erfinder: **Plöbst, Dietmar
Häusfeldsiedlung 670
A-5710 Kaprun(AT)**

(74) Vertreter: **Hofinger, Engelbert et al
Torggler-Hofinger Wilhelm-Greil-Strasse 16
A-6020 Innsbruck(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Verbundptatte, aus welcher durch Tiefziehen ein Badewanneneinsatz herstellbar ist, wobei auf einer Unterlage insbesondere aus Acrylnitril-Butadien-Styrol (ABS) ein Überzug aus Polymethylmethacrylat (PMMA, Acrylglas) angeordnet ist.

In EP-A-0 225 500 ist eine Möglichkeit beschrieben, durch geeignete Wahl des Schmelzindex einer gemeinsam mit einer Untertage aus ABS extrudierten Acrylschicht Badewanneneinsätze zu erzeugen, deren Qualität jenen aus gegossenem Acrylglas in etwa gleichkommt. Ein Maß für die Qualität des Einsatzes bildet dabei die Zahl der Füllungszyklen mit heißem und kaltem Wasser, denen eine Badewanne nach den einschlägigen CEN-Vorschriften unterworfen werden kann, bis die ersten feinen Haarrisse erkennbar werden. Die Badewanne wird bei einem derartigen Test abwechselnd mit Heißwasser von 95°C und Kaltwasser von 12°C gefüllt, wobei die Versuchsbedingungen genau vorgeschrieben sind.

Die Erfindung geht von der Erkenntnis aus, daß die vorgeschriebenen Tests insofern nicht genügend wirklichkeitsnahe sind, als sie den Einfluß der in manchen Ländern als Bestandteil von Putzmitteln zulässigen agressiven Lösungsmittel auf das Aussehen und die mechanischen Eigenschaften des Einsatzes nicht berücksichtigen. Der Erfindung lag somit die Aufgabe zugrunde, mit möglichst geringem zusätzlichen Aufwand die chemische Resistenz von Badewanneneinsätzen zu erhöhen, ohne hinsichtlich anderer Merkmale den gemäß EP-A-0 225 500 bereits erreichten Standard wieder aufzugeben.

Eine Lösung dieser Aufgabe wurde darin gefunden, daß der Überzug aus Acrylglas mit einer Deckschicht versehen ist, welche aus 30 - 70 Gew.-% Polyvinylidenfluorid (PVDF), Rest Polymethylmethacrylat besteht und daß die Dicke der mindestens 0,1 mm dicken Deckschicht unter 0,5 mm liegt.

Überraschenderweise genügt für die Deckschicht eine Dicke von wesentlich unter 0,5 mm, beispielsweise sogar von 0,1 mm. Trotz der extrem niedrigen Dicke der Deckschicht gelingt die Herstellung der erfindungsgemäßen Verbundplatte im Extrusionsverfahren, wenn , wie in EP-A-0 225 500 beschrieben, die Unterlage, der Überzug und die Deckschicht durch eine Breitschlitzdüse koextrudiert werden, wobei die Materialien, welche die drei Schichten bilden, durch verschiedene Kanäle, deren Breite dem fertigen Produkt entspricht, unmittelbar an die Breitschlitzdüse herangeführt werden.

Sowohl die guten chemischen Eigenschaften wie die Extrudierbarkeit von PVDF sind an sich bekannt. Würde man jedoch eine Deckschicht aus reinem PVDF auf den Acrylglasüberzug der Verbundplatte aufbringen (vgl. DE-A 2938462), so ginge die der Verbundplatte durch das Acrylglas verliehene Brillanz wieder verloren, da reines PVDF optisch nicht glasklar, sondern bloß transluzent mit milchiger Eigenfarbe ist. Es war durchaus überraschend, daß die Deckschicht durch die vorgeschlagene Beimischung von Methacrylat der Verbundplatte eine Brillanz und Härte verleiht, die jener einer Platte ohne Deckschicht gleichkommt. Gänzlich unerwartet war es,
daß die Aufbringung einer Deckschicht von derart geringer Dicke auch die Zahl der Füllungszyklen gemäß dem oben beschriebenen Versuch wesentlich erhöht, was vermutlich darauf zurückzuführen ist, daß ein speziell dafür verwendetes PVDF eine Bruchdehnung von 600 % aufweist und dadurch die erfindungsgemäße Mischung weniger spröd ist und weniger zu Haarrissen neigt als reines Acrylglas. Die beobachtete hervorragende Bindung zwischen Deckschicht und Acrylglasüberzug wird darauf zurückgeführt, daß die Deckschicht doch in einem erheblichen Ausmaß aus dem gleichen Material besteht wie der Überzug selbst.

Weitere Einzelheiten der Erfindung werden anschließend an einem Ausführungsbeispiel näher erläutert.

Ausführungsbeispiel:
–   –   –   –   –   –   –   –   –   –

Ein erfindungsgemäße Verbundplatte kann beispielsweise aus einer tragenden Platte von mehreren mm Stärke bestehen, welche aus gegebenenfalls mit Acrylat verstärktem ABS besteht. Als nächste Schicht ist eine 1 bis 2 mm dicke Lage von ABS vorgesehen, welche die Unterlage für einen Überzug aus Acrylglas (PMMA) mit einer Dicke von 1,2 mm bildet. Als Deckschicht dient die erfindungsgemäße Mischung aus Acrylglas und PVDF.

Im Sinne der Erfindung verwendbares PVDF wird beispielsweise von der Firma Pennwalt unter der Bezeichnung Kynar® 740/741 vertrieben. Dieses Material hat eine Schmelzviskosität von 2.100 Pa.s (21.000 poise) bei einer Scherrate von 100 $sec^{-1}$ bis 232°C.

Die Versuche zur Optimierung des Mischungsverhältnisses in der Deckschicht sind noch nicht abgeschlossen, doch wurden mit Werten von 60 % PVDF, 40 % PMMA bereits wesentliche Verbesserungen gegenüber dem Stand der Technik nach EP-A-0 225 500 erzielt, welche den Kostenaufwand für das relativ teure PVDF und das Aufbringen einer zusätzlichen Schicht mehr als rechtfertigen.

## Patentansprüche

1. Verbundptatte, aus welcher durch Tiefziehen

2

ein Badewanneneinsatz herstellbar ist, wobei auf einer Untertage insbesondere aus Acrylnitril-Butadien-Styrol (ABS) ein Überzug aus Polymethylmethacrylat (PMMA, Acrylglas) angeordnet ist, dadurch gekennzeichnet, daß der Überzug aus Acrylglas mit einer Deckschicht versehen ist, welche aus 30 - 70 Gew.-% Polyvinylidenfluorid (PVDF), Rest Polymethylmethacrylat besteht und daß die Dicke der mindestens 0,1 mm dicken Deckschicht unter 0,5 mm liegt.

## Claims

1. A composite plate from which a bathtub insert can be produced by deep drawing, wherein arranged on a support in particular of acrylonitrile-butadiene-styrene (ABS) is a coating of polymethyl methacrylate (PMMA,acrylic glass), characterised in that the coating of acrylic glass is provided with a cover layer which comprises 30 - 70% by weight of Polyvinylidene fluoride (PVDF), and the balance Polymethyl methacrylate, and that the thickness of the cover layer which is at least 0.1 mm thick is below 0.5 mm.

## Revendications

1. Plaque composite, à partir de laquelle une garniture de baignoire peut être fabriquée par emboutissage profond, où, sur une sous-couche, en particulier en acrylnitril-butadiène-styrol (ABS) est disposé un revêtement en polyméthacrylate de méthyle (PMMA, verre acrylique), caractérisée en ce que le revêtement en verre acrylique est doté d'une couche de couverture composée de 30 à 70 % en poids de fluorure de polyvinylidène (PVDF), le reste étant du polyméthacrylate de méthyle et en ce que l'épaisseur de la couche de couverture est d'au moins 0,1 mm et inférieure à 0,5 mm.